# EUROPEAN PATENT SPECIFICATION

(11) **EP 2 025 571 B1**
(45) Date of publication and mention of the grant of the patent: **20.10.2010**
(21) Application number: 07425535.7
(22) Date of filing: 17.08.2007
(51) Int. Cl.: B60W 50/02, B60G 17/0185, B60T 8/88, G05B 9/03

(54) **An improved limp-home circuit arrangement for passenger-compartment and bodywork functions**
Verbesserte Limp-Home-Schaltungsanordnung für Insassenraum- und Karosseriefunktionen
Agencement de circuit de secours amélioré pour fonctions de compartiment passager et de caisse

(43) Date of publication of application: 18.02.2009
(73) Proprietor: Magneti Marelli S.p.A., 20011 Corbetta (MI) (IT)
(72) Inventor: Costa, Daniele, 10078 Venaria Reale (Torino) (IT); Tuiach, Mirko, 10078 Venaria Reale (Torino) (IT)
(74) Representative: Deambrogi, Edgardo

(56) References cited:
- DE-A1- 19 716 197
- GB-A- 2 355 081

## Description

The present invention relates to the emergency management of passenger-compartment and bodywork functions in a vehicle and, more specifically, to a circuit arrangement for the control of the passenger-compartment and bodywork devices of a vehicle, with an emergency function for maintaining guaranteed minimal operability of the devices in a moving vehicle in the event of a fault of the electronic unit which governs their control.

GB 2 355 081 A discloses a circuit arrangement according to the preamble of claim 1.

In a vehicle, one or more electronic control units govern the surveillance and management of the vehicle functions, for example, propulsion control, braking systems and dynamics in general, safety systems and passenger-compartment/bodywork devices such as lights (external and internal), wiper devices and comfort devices in general, and access-control devices (door closure and locking).

For reasons of safety, there is a need to maintain the functional capability of the systems on board the vehicle in the event of breakdowns in the operating logic (software defects) or in the electronic circuits of which they are composed (hardware breakdowns in the control circuits or in the oscillator of the micro-controller device of the unit) to allow the vehicle to reach an emergency destination in conditions of safety, in general until the engine is switched off and the key removed.

For highly critical functions (for example, such as propulsion, dynamics and safety control) expensive redundancy hardware is provided, with duplication of the respective control units to ensure full management of the functional capabilities of a vehicle in the event of breakdowns in the main unit, by means of a substantially identical auxiliary unit.

For less critical functions, for example, the passenger-compartment and bodywork functions such as lighting, comfort, and access control, failure of these functional capabilities in the event of a breakdown is permitted to a large extent because, for the most part, they are accessories and are not critical for the safe movement of the vehicle. Some of these functions, however, cannot be excluded definitively since they could give rise to effectively dangerous situations, for example, the external lights of the vehicle or the wiper system, should a breakdown occur during travel at night or in the rain, for which the vehicle needs to be able to complete the journey in safety with full effectiveness of some minimal passenger-compartment/bodywork functions.

In this case, it is a very expensive solution to duplicate the control unit which governs the management of these functions in order to make provision for breakdowns and it is preferred to include (incorporate) in the unit a simplified emergency circuit which allows the functions that may anyway be critical to be enabled until the vehicle is taken in for repair, that is, generally until the vehicle's engine is switched off and the key is removed, after which a significant breakdown in the control unit does not allow it to be initialized again for restarting, obliging the vehicle to stop for the repair or replacement of the defective components.

This down-graded emergency mode of operation is better known as a "limp-home" function.

The simplest implementation of a "limp-home" function provides for the control unit to be arranged automatically in the emergency operative condition in which the simplified emergency circuit forces switching-on of the on-board devices (for example: lights, wiper system) for which a functional capability may nevertheless be required, whether or not it is necessary or the conditions require it, excluding any possibility of intervention by the driver. This means that the lights, and possibly even the windscreen wipers, are switched on even in conditions in which there is sufficient light and no rain.

In this case, an excessive simplification of the emergency circuit, which involves the loss of the functional capability to physically control the operation of the above-mentioned devices, leads to driving discomfort and inconvenience for the driver as well as - in some cases - excessive energy consumption, which is critical in anomalous vehicle conditions.

A further disadvantage of the known solution is that it necessarily excludes or renders completely unusable some functions which are useful from the safety point of view such as, for example, the availability of the stop lights for indicating braking of a vehicle. In fact these lights perform their function precisely because they can be activated selectively in dependence on the conditions of movement of the vehicle and cannot be kept permanently lit (as for the sidelights or headlights) without loss of effectiveness.

The object of the present invention is to overcome the disadvantages of the prior art by providing a circuit arrangement for the control of the passenger-compartment and bodywork devices of a vehicle, with an emergency function for maintaining guaranteed minimal functional capabilities of the devices which is based on a simplified emergency circuit that offers the driver of the vehicle a margin of control for the switching on/off of the devices in an emergency situation.

A further object of the invention is to provide a control arrangement for maintaining minimal emergency functional capabilities for the largest possible number of passenger-compartment/bodywork devices and also with multiple commands, which ensures accurate reading of the command and/or the setting of a command sensitivity threshold.

Another object of the invention is to provide an arrangement for controlling the passenger-compartment and bodywork devices of a vehicle with emergency functions which can remedy breakdowns of various types in the main control unit.

Yet another object of the invention is to provide an arrangement which ensures the activation of a minimal configuration of emergency functional capability of the passenger-compartment/bodywork devices, even after the vehicle has been switched off and the electrical supply has been disconnected.

A further object of the invention is to provide a control circuit arrangement which can be produced at low cost and the operation of which is as stable as possible with respect to temperature and is protected from noise in the command signals.

According to the present invention, these objects are achieved by means of a circuit arrangement for the control of the passenger-compartment and bodywork devices of a vehicle having the characteristics defined in Claim 1.

Specific embodiments form the subjects of the dependent claims.

Further advantages and characteristics of the present invention will become clear from the following detailed description with reference to the appended drawings which are provided purely by way of non-limiting example and in which:
Figure 1 shows schematically the control circuit arrangement of the invention, and
Figure 2 shows a circuit detail of the arrangement of Figure 1.

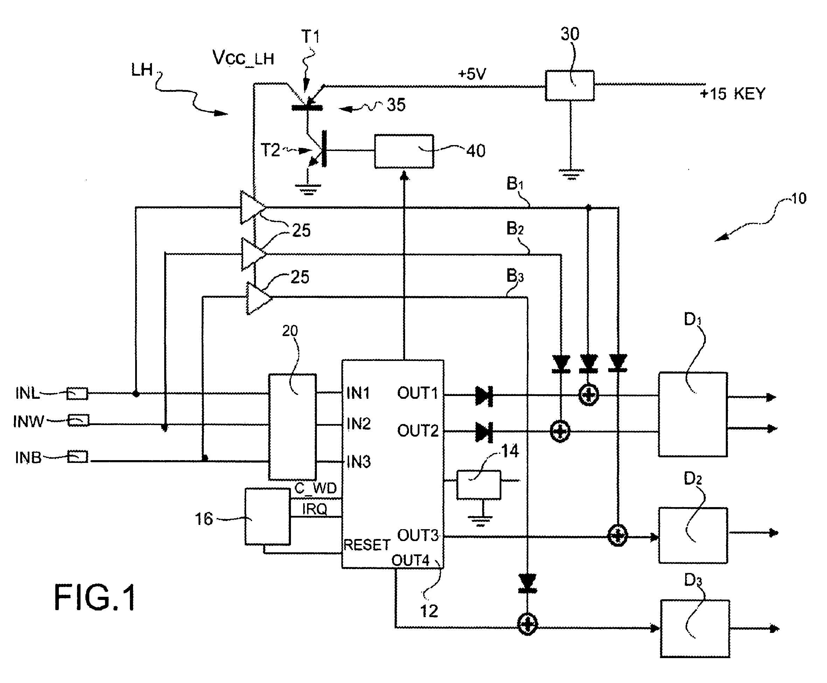

In Figure 1, a circuit arrangement for the control of the passenger-compartment and bodywork devices of a vehicle is generally indicated 10 and comprises a main microprocessor control unit 12 which is supplied by the vehicle battery (+30) by means of a voltage regulator 14. A watchdog device 16 is arranged beside the control unit 12 for the surveillance of the correct operation thereof and, more particularly, is adapted to receive from the unit 12 periodic reset signals C_WD which are generated inside the unit and in response to which the watchdog device 16 is arranged to emit a response signal IRQ. A RESET input of the unit is adapted to receive from the watchdog device 16 and from the regulator 14 signals for resetting the unit in the event of a malfunction or under voltage, for which an attempt to restart the system is required.

A plurality of control inputs IN1, IN2, IN3 of the unit 12 are connected to a corresponding plurality of inputs of the circuit arrangement in order to receive commands for the switching-on or selection of the passenger-compartment and bodywork devices of a vehicle. For example, a lights command and selection input INL, a windscreen-wiper device switching-on and speed-selection input INW, and a brake-pedal pressure indicating input INB are shown, coupled to the unit 12 by means of a signal-conditioning input interface 20.

The signal-conditioning interface 20 comprises, for each input INL, INW, INB, a respective pull-up resistor for connection to a supply voltage (generally 5V) derived from the regulator by means of an enabling switch (not shown) controlled directly by the control unit, and an RC cell including a series resistor and a capacitor, at the terminals of which the voltage input to an A/D converter circuit of the unit 12 is taken off.

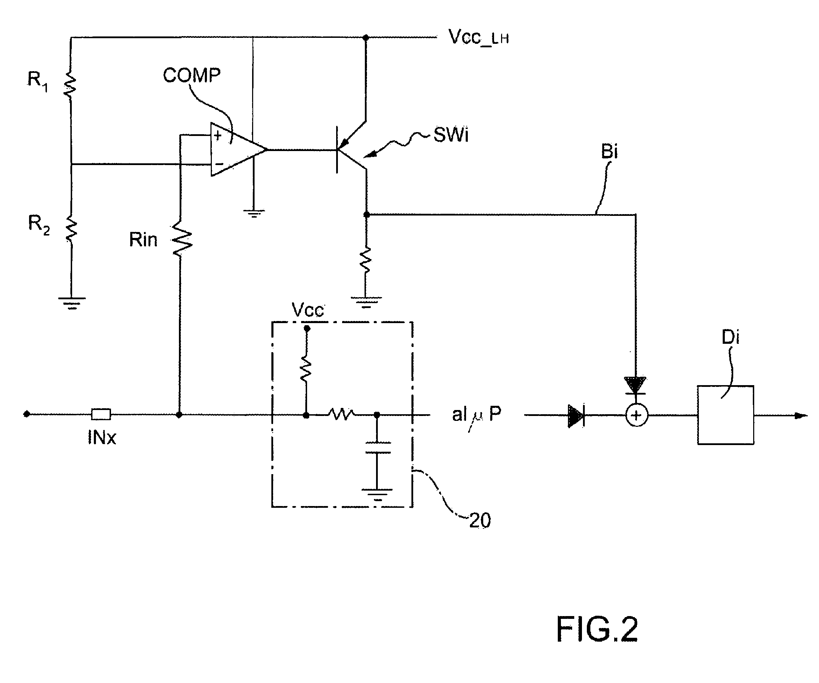

The inputs may be associated with simple switched command circuits, for example, including an on/off switch adapted to establish/interrupt a connection to a reference potential (ground), or with multiple-selection command circuits, for example, with resistive encoding, including a bundle of parallel branches with different resistive characteristics, each including its own on/off switch adapted to establish/interrupt a respective connection to a reference potential (ground), as shown in the example of Figure 2.

By means of a plurality of control outputs OUT1, OUT2, OUT3, OUT4, the unit 12 supplies signals to driver circuits D1, D2, D3 of the on-board devices for implementing the commands received, in the embodiment shown, these are for driving the dipped headlights of the vehicle (D1), the windscreen-wiper device (D1), the sidelights (D2), and the stop light (D3). In detail, the driver circuit D1 controls the operation of the windscreen-wiper device at a single speed and in continuous mode, as is also used in limp-home emergency control, whereas another driver circuit (not shown) is arranged to control the operation of the windscreen-wiper device at the other speeds and in the other modes that are provided for. The control unit is programmed to generate the driving signals in accordance with the input commands received, in fact providing a command path between inputs and outputs of the control device in a normal operative condition.

An emergency circuit of the control device 10, which is associated with the control unit 12, is generally indicated LH and comprises a plurality of parallel command branches B₁, B₂, B₃ which are arranged so as to bypass the control unit 12 and to connect the switched inputs INL, INW and INB to the driver circuits D1, D2, D3 of the on-board devices.

Each by-pass branch includes an enabling and driving gate 25 connected to a supply line of the circuit LH which is connected to a power source of the vehicle by means of the starter switch (+15, key).

Interposed in the supply line are a regulator circuit 30 for providing a regulated voltage (for example, 5V) for the supply of the enabling and driving gates 25 and, downstream thereof, selector means for enabling the circuit LH to operate.

With reference to the detailed circuit diagram of Figure 2, each enabling and driving gate 25 includes a threshold comparator circuit COMP supplied directly with a voltage V_{CC_LH} which is available selectively downstream of the selector means, and an enabling switch device SWᵢ (a bipolar transistor in the embodiment shown), the control terminal (base) of which is coupled to the output of the comparator and the output terminal (collector) of which is coupled to the respective command branch Bᵢ.

The comparator circuit COMP has a non-inverting input connected to a switched input INx (INL, INW or INB) by means of an input resistor Rᵢₙ of variable value (steering-column light selector, steering-column windscreen-wiper selector, stop pedal input) and an inverting input connected to a resistive divider (R₁, R₂) between the voltage V_{CC_LH} and ground for defining the comparison and switching threshold of the circuit that is - ultimately - for defining the enabling threshold of the respective by-pass branch.

In an improved embodiment, the resistive divider can be modified at the stage at which the circuit arrangement is programmed so as to set a desired threshold for the activation of the emergency circuit in dependence on known values which the command signal may adopt. In practice, the position of each selector, that is, the respective resistive input value at which the emergency circuit is to be caused to operate/de-activated, can be selected for INL and INW.

In a further improved embodiment, the threshold comparator COMP is a threshold comparator with hysteresis.

The selector means for enabling the LH circuit to operate include, in the preferred embodiment, a switching arrangement 35 of bipolar transistors adapted to establish or exclude the connection of the regulated voltage output of the voltage regulator 30 to the enabling inputs of the gates 25, in dependence on a triggering signal emitted by a timer device 40 the input of which is controlled by a reset signal emitted by the control unit 12.

In detail, the switching arrangement 35 has a first, p-n-p-type bipolar transistor T1 having its collector terminal connected to the enabling inputs of the comparators of the gates 25, its emitter terminal connected to the output of the voltage regulator 30, and its base terminal connected to the collector terminal of a second, n-p-n-type bipolar transistor T2 the emitter terminal of which is connected to a ground potential and the base terminal of which is connected to the output of the timer 40.

The timer device 40 receives a supply from the starter switch via the regulator 30 and is arranged to emit a triggering signal at its output when a predetermined time limit intervention value is reached; for example, this may be a count limit value if it is implemented by means of a counter or, for an analogue implementation, a time value given by an RC time constant.

The timer device 40 is advantageously produced in accordance with known circuit techniques on the basis of a comparator circuit. Thus, for an emergency circuit which is designed to serve three switched inputs (INL, INW, INB), in which each by-pass branch of the control unit includes an enabling and driving gate which in turn is formed by a comparator circuit, it is possible to utilize fully all four of the comparator circuits that are available in a single commercial integrated circuit (for example, National Semiconductor's LM2901) without wasting resources and with benefits in manufacturing costs.

According to the arrangement of the invention, the intervention of the emergency circuit LH is exclusive, as an alternative to the operation of the control unit 12, unlike a device with two control units in an OR arrangement according to the prior art in which both units are active and simultaneously receive signals to ensure rapid reaction times in the event of a breakdown.

In the normal operating condition, the main microprocessor control unit 12 is arranged to emit periodically a signal for resetting the timer 40 (zeroing the count of a counter or discharging the capacitor of an RC cell) before the predetermined time limit value is reached.

The reset signal is generated periodically, advantageously with a period (5 ms) substantially less than the required intervention time (100ms).

When an anomaly occurs in the control unit or in its voltage regulator 14, the watchdog device 16 no longer receives from the unit 12 the periodic reset signals C_WD that are generated inside the unit and emits a reset signal to the RESET input of the unit to try to restart it. If this is unsuccessful, since the control unit 12 is no longer operative, it does not emit a signal to reset the timer 40 so that, when a predefined waiting period of time has elapsed, the timer reaches the predetermined time limit value and outputs the triggering signal. This leads to conduction of the transistor T2 and of the transistor T1 in series so that the enabling and driving gates 25 of the branches of the emergency circuit LH receive the supply from the regulator 30. The voltage V_{CC_LH} which is established downstream of the regulator enables the switch SWᵢ and, at the same time, constitutes the supply voltage of the comparator circuit COMP to permit "digital" reading of the respective command input and comparison with the preset threshold voltage. A direct path for the control of the passenger-compartment/bodywork devices is thus established from the command inputs INL, INW, INB to the driving outputs D1, D2, D3, as an alternative to the control unit.

If the command inputs to which the emergency circuit is connected are multiple-selection inputs with resistive encoding, the input resistance Rᵢₙ at the non-inverting input of the comparator is advantageously selected so as to permit simplified recognition of a switched-off configuration of the command and of a clearly-defined switched-on configuration ("digital" reading), irrespective of the plurality of switched-on configurations which are possible in normal operation and are thus recognizable by the microprocessor of the control unit, for example, for the command of different lighting options (sidelights, dipped headlights, automatic light sensor) or different wiper speeds.

The circuit LH advantageously always enables the commands set at the inputs of the control device to be transferred to the actuators of the passenger-compartment/bodywork devices so that, even in emergency conditions, the switching on or off of the driving lights, of the wiper devices, of the stop lights and of other necessary devices can always be controlled as the driver wishes.

Moreover, the particular supply of the emergency circuit LH (under key) enables the emergency functional capabilities to be utilized even if the vehicle has stopped and been switched-off, since upon a subsequent request for emergency activation, to which the control unit can no longer respond and perform its own initialization, the emergency circuit LH can receive a supply via its own line. Since the timing is independent of the control unit in its operation, it will start its own time progression as soon as it is supplied and, since it receives no reset signal from the unit 12, will immediately reach the predetermined time-limit value and will output the triggering signal so that the enabling and driving gates 25 of the branches of the emergency circuit LH will receive the supply from the regulator 30 and will be able to re-establish a direct path for the control of the passenger-compartment/bodywork devices from the command inputs INL, INW, INB to the driving outputs D1, D2, D3.

The arrangement of the invention advantageously maintains the independence of the emergency circuit from the voltage-regulator circuit associated with the control unit so as to respond effectively not only to breakdowns of the microprocessor of the control unit but also of the regulator, broadening the range of operational anomalies for which emergency intervention is possible.

The use of comparator circuits in the implementation of the enabling and driving gates advantageously permits greater reading precision than other possible circuit configurations, for example, with the interposition of a simple pull-up resistor between the voltage V_{CC_LH} and the command input and, indirectly, broader control dynamics, constituting an intrinsically unidirectional current path so that it is not necessary to interpose de-coupling diodes which would necessarily lead to a drop of about 0.7 volts from the command input signal to the enabling and driving gates of the by-pass branches.

Moreover, the use of comparator circuits in integrated technology ensures greater stability with respect to temperature and rejection of any signal noise which might be superimposed on the input commands, in comparison with thermally unfavourable, purely resistive solutions since the threshold comparison operation, preferably with hysteresis, constitutes a type of filter of the noise applied to the input command signals.

Naturally, the principle of the invention remaining the same, the forms of embodiment and details of construction may be varied widely with respect to those described and illustrated purely by way of non-limiting example, without thereby departing from the scope of protection of the present invention defined by the appended claims.

## Claims

1. A circuit arrangement (10) controlling the passenger-compartment and bodywork devices of a vehicle, having a plurality of command inputs (INL, INW, INB) adapted to receive commands for the switching-on of the devices, and a plurality of driving outputs (D1, D2, D3) adapted to emit signals for driving the devices to implement the commands received as inputs, the circuit arrangement (10) comprising
a control unit (12) which is coupled to the command inputs (INL, INW, INB) and to the outputs (D1, D2, D3) and is arranged to recognize the input commands received and to generate respective output driving signals so as to provide a command path in a normal operative condition; and a limp-home emergency circuit (LH) including a plurality of connection branches (B₁, B₂, B₃) adapted to couple the command inputs (INL, INW, INB) to the respective driving outputs (D1, D2, D3) by means of respective alternative command paths which by-pass the control unit (12), the branches (B₁, B₂, B₃) comprising means (25, 35, 40) for enabling the alternative command paths in dependence on the recognition of an anomalous operating condition of the control unit (12),
**characterized in that** the enabling means (25, 35, 40) comprises:
- switch means (35) which are interposed between the branches (B₁, B₂, B₃) and a supply node (V_{CC_LH)} and which are adapted to adopt a non-conductive condition in which they exclude the connection of the branches (B₁, B₂, B₃) to the supply node (V_{CC_LH}) and to the respective command inputs (INL, INW, INB), and a conductive condition in which they bring about the connection of the branches (B₁, B₂, B₃) to the supply node (V_{CC_LH}) and to the respective command inputs (INL, INW, INB), and
- an enabling and driving circuit (25) for each connection branch (B₁, B₂, B₃), which circuit (25) includes comparing means (COMP) adapted to compare the value of the signal that is present at the respective command input (INL, INW, INB) with a predetermined reference threshold value, and an associated enabling switch device (SWᵢ) adapted to connect the respective connection branch (B₁, B₂, B₃) to the supply node (V_{CC-_LH}) in dependence on the result of the comparison in the comparing means (COMP).

2. An arrangement (10) according to Claim 1, in which the enabling switch device (SWᵢ) has a control terminal coupled to the output of the comparing means (COMP) and an output terminal coupled to the respective branch (B₁, B₂, B₃) for connection to the respective driving output (D1, D2, D3).

3. An arrangement (10) according to Claim 1 or Claim 2, in which the comparing means (COMP) are arranged to receive a supply from the supply node (V_{CC_LH}).

4. An arrangement (10) according to any one of the preceding claims, in which the comparing means (COMP) include means (R₁, R₂) for setting the reference threshold value.

5. An arrangement (10) according to any one of the preceding claims, in which the comparing means (COMP) include a threshold comparator with hysteresis.

6. An arrangement (10) according to any one of the preceding claims, in which the switch means (35) comprise a switching arrangement the conduction of which can be controlled by timer means (40) which are arranged to recognize an anomalous operating condition of the control unit (12).

7. An arrangement (10) according to any one of the preceding claims, in which the supply node (V_{CC_LH}) is connected to a voltage supply of the vehicle by means of the on-board starter switch.

8. An arrangement (10) according to Claim 7, in which the supply node (V_{CC_LH}) is adapted to receive a supply voltage from respective voltage regulator means (30) which are supplied by the voltage supply and which are independent of voltage regulator means (14) provided for the supply of the control unit (12).

9. An arrangement (10) according to Claim 6, in which the timer means (40) comprise a counter circuit.

10. An arrangement (10) according to Claim 6, in which the timer means (40) have an RC time constant.

11. An arrangement (10) according to Claim 6, in which the timer means (40) have a resetting input which is adapted to receive resetting signals emitted periodically by the control unit (12) and to reset the time progression of the timer means (40) before a predetermined time limit value is reached.

12. An arrangement (10) according to Claim 11, in which the signal for resetting the timer means (40) is a periodic signal generated by the control unit (12) with a period at least one order of magnitude less than the required intervention time.

13. An arrangement (10) according to Claim 11, in which the timer means (40) are arranged to emit a signal for triggering conduction of the switch arrangement (35) when the predetermined time limit value is exceeded.

14. An arrangement (10) according to Claim 6, in which the timer means (40) is adapted to receive a supply from the on-board starter switch via the voltage regulator means (30).

15. An arrangement (10) according to any one of the preceding claims, in which the limp-home emergency circuit (LH) comprises an input resistor which is connected to the non-inverting input of the comparing means (COMP) and which has an electrical resistance value such as to render a switched-off configuration of a command distinguishable from a general switched-on configuration of the command, irrespective of the plurality of switched-on configurations that are possible in the case of command inputs (INL, INW) having multiple selection with resistive encoding.

16. An arrangement (10) according to Claim 6, in which the switching arrangement (35) has a first bipolar transistor (T1) having its collector terminal connectible in controlled manner to the command inputs (INL, INW, INB), its emitter terminal connected to the voltage regulator means (30), and its base terminal connected to the collector terminal of a second bipolar transistor (T2) the emitter terminal of which is connected to a reference potential and the base terminal of which is connected to the timer means (40).

## Patentansprüche

1. Schaltungsanordnung (10), um die Fahrgastraum- und Karosserievorrichtungen eines Fahrzeugs zu steuern, die mehrere Befehlseingänge (INL, INW, INB), die dazu ausgelegt sind, Befehle zum Einschalten der vorrichtungen zu empfangen, und mehrere Ansteuerungsausgänge (D1, D2, D3), die dazu ausgelegt sind, Signale zum Ansteuern der Vorrichtungen auszusenden, um die als Eingänge empfangenen Befehle zu implementieren, besitzt, wobei die Schaltungsanordnung (10) umfasst
eine Steuereinheit (12), die mit den Befehlseingängen (INL, INW, INB) und mit den Ausgängen (D1, D2, D3) gekoppelt ist und dazu ausgelegt ist, die empfangenen Eingangsbefehle zu erkennen und entsprechende Ausgangsansteuerungssignale zu erzeugen, um in einem normalen Betriebszustand einen Befehlspfad zu schaffen; und
eine Notlaufschaltung (LH), die mehrere Verbindungszweige (B₁, B₂, B₃) enthält, die dazu ausgelegt sind, die Befehlseingänge (INL, INW, INB) mit den entsprechenden Ansteuerungsausgängen (D1, D2, D3) mittels entsprechender alternativer Befehlspfade, die die Steuerschaltung (12) umgehen, zu koppeln, wobei die Zweige (B₁, B₂, B₃) Mittel (25, 35, 40) umfassen, um die alternativen Befehlspfade in Abhängigkeit von der Erkennung eines anomalen Betriebszustands der Steuerschaltung (12) freizugeben,
**dadurch gekennzeichnet, dass** die Freigabemittel (25, 35, 40) umfassen:
- Schaltmittel (35), die zwischen die Zweige (B₁, B₂, B₃) und einen Versorgungsknoten (V_{CC_LH}) eingefügt sind und dazu ausgelegt sind, einen nicht leitenden Zustand anzunehmen, indem sie die Verbindung der Zweige (B₁, B₂, B₃) mit den Versorgungsknoten (V_{CC_LH}) und mit den jeweiligen Befehlseingängen (INL, INW, INB) unterbrechen, und einen leitenden Zustand anzunehmen, indem sie die Verbindung der Zweige (B₁, B₂, B₃) mit dem Versorgungsknoten (V_{CC}__{LH}) und mit den jeweiligen Befehlseingängen (INL, INW, INB) herstellen, und
- eine Freigabe- und Ansteuerungsschaltung (25) für jeden Verbindungszweig (B₁, B₂, B₃), wobei die Schaltung (25) Vergleichsmittel (COMP), die dazu ausgelegt sind, den Wert des Signals, das an dem entsprechenden Befehlseingang (INL, INW, INB) vorhanden ist, mit einem vorgegebenen Referenzschwellenwert zu vergleichen, und eine zugeordnete Freigabeschaltvorrichtung (SWᵢ), die dazu ausgelegt ist, den jeweiligen Verbindungszweig (B₁, B₂, B₃) in Abhängigkeit vom Ergebnis des Vergleichs der Vergleichsmittel (COMP) mit dem Versorgungsknoten (V_{CC_LH}) zu verbinden, umfasst.

2. Anordnung (10) nach Anspruch 1, wobei die Freigabeschaltvorrichtung (SWᵢ) einen Steueranschluss, der mit dem Ausgang der Vergleichsmittel (COMP) gekoppelt ist, und einen Ausgangsanschluss, der mit dem entsprechenden Zweig (B₁, B₂, B₃) für die Verbindung mit dem jeweiligen Ansteuerungsausgang (D1, D2, D3) gekoppelt ist, umfasst.

3. Anordnung (10) nach Anspruch 1 oder Anspruch 2, wobei die Vergleichsmittel (COMP) dazu ausgelegt sind, eine Versorgung von dem Versorgungsknoten (V_{CC}__{LH}) zu empfangen.

4. Anordnung (10) nach einem der vorhergehenden Ansprüche, wobei die Vergleichsmittel (COMP) Mittel (R₁, R₂) umfassen, um den Referenzschwellenwert zu setzen.

5. Anordnung (10) nach einem der vorhergehenden Ansprüche, wobei die Vergleichsmittel (COMP) einen Schwellenkomparator mit Hysterese enthalten.

6. Anordnung (10) nach einem der vorhergehenden Ansprüche, wobei die Schaltmittel (35) eine Schaltanordnung umfassen, deren leitender Zustand durch Zeitgebermittel (40) gesteuert werden kann, die dazu ausgelegt sind, einen anomalen Betriebszustand der Steuereinheit (12) zu erkennen.

7. Anordnung (10) nach einem der vorhergehenden Ansprüche, wobei der Versorgungsknoten (V_{CC_LH}) mit einer Spannungsversorgung des Fahrzeugs über den bordinternen Anlasserschalter verbunden ist.

8. Anordnung (10) nach Anspruch 7, wobei der Versorgungsknoten (U_{CC_LH}) dazu ausgelegt ist, eine Versorgungsspannung von entsprechenden Spannungsregulierungsmitteln (30) zu empfangen, die mit der Versorgungsspannung versorgt werden und die von Spannungsregulierungsmitteln (14), die für die Versorgung der Steuereinheit (12) vorgesehen sind, unabhängig sind.

9. Anordnung (10) nach Anspruch 6, wobei die Zeitgebermittel (40) eine Zählerschaltung umfassen.

10. Anordnung (10) nach Anspruch 6, wobei die Zeitgebermittel (40) eine RC-Zeitkonstante besitzen.

11. Anordnung (10) nach Anspruch 6, wobei die Zeitgebermittel (40) einen Rücksetzeingang besitzen, der dazu ausgelegt ist, Rücksetzsignale zu empfangen, die von der Steuereinheit (12) periodisch ausgesendet werden, und den Zeitfortschritt der Zeitgebermittel (40) zurückzusetzen, bevor ein vorgegebener Zeitgrenzwert erreicht ist.

12. Anordnung (10) nach Anspruch 11, wobei das Signal zum Zurücksetzen der Zeitgebermittel (40) ein periodisches Signal ist, das durch die Steuereinheit (12) mit einer Periode erzeugt wird, die wenigstens eine Größenordnung kleiner als die erforderliche Eingreifzeit ist.

13. Anordnung (10) nach Anspruch 11, wobei die Zeitgebermittel (40) dazu ausgelegt sind, ein Signal zum Auslösen des leitenden Zustands der Schaltanordnung (35) auszusenden, wenn der vorgegebene Zeitgrenzwert überschritten wird.

14. Anordnung (10) nach Anspruch 6, wobei die Zeitgebermittel (40) dazu ausgelegt sind, eine Versorgung von einem bordinternen Anlasserschalter über die Spannungsregulierungsmittel (30) zu empfangen.

15. Anordnung (10) nach einem der vorhergehenden Ansprüche, wobei die Notlaufschaltung (LH) einen Eingangswiderstand enthält, der mit dem nicht invertierenden Eingang der Vergleichsmittel (COMP) verbunden ist und einen elektrischen Widerstandswert besitzt, um eine ausgeschaltete Konfiguration eines Befehls von einer allgemeinen eingeschalteten Konfiguration des Befehls unabhängig von den mehreren eingeschalteten Konfigurationen, die im Fall von Befehlseingängen (INL, INW), die eine Mehrfachauswahl mit resistiver Codierung haben, unterscheidbar zu machen.

16. Anordnung (10) nach Anspruch 6, wobei die Schaltanordnung (35) einen ersten Bipolartransistor (T1) besitzt, dessen Kollektoranschluss auf gesteuerte Weise mit den Befehlseingängen (INL, INW, INB) verbunden werden kann, dessen Emitteranschluss mit den Spannungsregulierungsmitteln (30) verbunden ist und dessen Basisanschluss mit dem Kollektoranschluss eines zweiten Bipolartransistors (T2) verbunden ist, dessen Emitteranschluss wiederum mit einem Referenzpotential verbunden ist und dessen Basisanschluss mit den Zeitgebermitteln (40) verbunden ist.

## Revendications

1. Agencement de circuit (10) commandant les dispositifs de compartiment passager et de caisse d'un véhicule, ayant une pluralité d'entrées de commande (INL, INW, INB) aptes à recevoir des commandes pour la mise sous tension des dispositifs, et une pluralité de sorties d'entraînement (D1, D2, D3) aptes à émettre des signaux pour amener les dispositifs à mettre en oeuvre les commandes reçues en tant qu'entrées, l'agencement de circuit (10) comprenant
une unité de commande (12) qui est couplée aux entrées de commande (INL, INW, INB) et aux sorties (D1, D2, D3) et est agencée pour reconnaître les commandes d'entrée reçues et pour générer des signaux d'entraînement de sortie respectifs de manière à fournir une voie de commande dans un état de fonctionnement normal ; et
un circuit de secours (LH) comprenant une pluralité de branches de connexion (B₁, B₂, B₃) aptes à coupler les entrées de commande (INL, INW, INB) aux sorties d'entraînement respectives (D1, D2, D3) au moyen de voies de commande alternatives respectives qui dérivent l'unité de commande (12), les branches (B₁, B₂, B₃) comprenant des moyens (25, 35, 40) pour activer les voies de commande alternatives en fonction de la reconnaissance d'un état de fonctionnement anormal de l'unité de commande (12),
**caractérisé en ce que** les moyens d'activation (25, 35, 40) comprennent :
- des moyens de commutation (35) qui sont interposés entre les branches (B₁, B₂, B₃) et un noeud d'alimentation (V_{CC_LH}) et qui sont aptes à adopter un état non conducteur dans lequel ils excluent la connexion des branches (B₁, B₂, B₃) au noeud d'alimentation (V_{CC_LH}) et aux entrées de commande respectives (INL, INW, INB) et un état conducteur dans lequel ils provoquent la connexion des branches (B₁, B₂, B₃) au noeud d'alimentation (V_{CC_LH}) et aux entrées de commande respectives (INL, INW, INB), et
- un circuit d'activation et d'entraînement (25) pour chaque branche de connexion (B₁, B₂, B₃), lequel circuit (25) comprend un moyen de comparaison (COMP) apte à comparer la valeur du signal qui est présent à l'entrée de commande respective (INL, INW, INB) à une valeur de seuil de référence prédéterminée, et un dispositif de commutation d'activation associé (SWᵢ) apte à connecter la branche de connexion respective (B₁, B₂, B₃) au noeud d'alimentation (V_{CC_LH}) en fonction du résultat de la comparaison du moyen de comparaison (COMP).

2. Agencement (10) selon la revendication 1, dans lequel le dispositif de commutation d'activation (SWᵢ) a une borne de commande couplée à la sortie du moyen de comparaison (COMP) et une borne de sortie couplée à la branche respective (B₁, B₂, B₃) pour une connexion à la sortie d'entraînement respective (D1, D2, D3).

3. Agencement (10) selon la revendication 1 ou la revendication 2, dans lequel le moyen de comparaison (COMP) est agencé pour recevoir une alimentation du noeud d'alimentation (V_{CC_LH}).

4. Agencement (10) selon l'une quelconque des revendications précédentes, dans lequel le moyen de comparaison (COMP) comprend des moyens (R₁, R₂) pour régler la valeur de seuil de référence.

5. Agencement (10) selon l'une quelconque des revendications précédentes, dans lequel le moyen de comparaison (COMP) comprend un comparateur de seuil avec hystérésis.

6. Agencement (10) selon l'une quelconque des revendications précédentes, dans lequel le moyen de commutation (35) comprend un agencement de commutation dont la conduction peut être commandée par un moyen de temporisation (40) qui est agencé pour reconnaître un état de fonctionnement anormal de l'unité de commande (12).

7. Agencement (10) selon l'une quelconque des revendications précédentes, dans lequel le noeud d'alimentation (V_{CC_LH}) est connecté à une alimentation de tension du véhicule au moyen du commutateur de démarreur embarqué.

8. Agencement (10) selon la revendication 7, dans lequel le noeud d'alimentation (V_{CC_LH}) est apte à recevoir une tension d'alimentation de moyens de régulation de tension respectifs (30) qui sont alimentés par l'alimentation de tension et qui sont indépendants du moyen de régulation de tension (14) fourni pour l'alimentation de l'unité de commande (12).

9. Agencement (10) selon la revendication 6, dans lequel le moyen de temporisation (40) comprend un circuit de compteur.

10. Agencement (10) selon la revendication 6, dans lequel le moyen de temporisation (40) a une constante de temps RC.

11. Agencement (10) selon la revendication 6, dans lequel les moyens de temporisation (40) ont une entrée de réinitialisation qui est apte à recevoir des signaux de réinitialisation émis périodiquement par l'unité de commande (12) et à réinitialiser la progression de temps des moyens de temporisation (40) avant qu'une valeur de limite de temps prédéterminée soit atteinte.

12. Agencement (10) selon la revendication 11, dans lequel le signal de réinitialisation du moyen de temporisation (40) est un signal périodique généré par l'unité de commande (12) avec une période inférieure d'au moins un ordre de grandeur au temps d'intervention requis.

13. Agencement (10) selon la revendication 11, dans lequel le moyen de temporisation (40) est agencé pour émettre un signal pour déclencher la conduction de l'agencement de commutation (35) lorsque la valeur de limite de temps prédéterminée est dépassée.

14. Agencement (10) selon la revendication 6, dans lequel le moyen de temporisation (40) est apte à recevoir une alimentation du commutateur de démarreur embarqué par le biais du moyen de régulation de tension (30).

15. Agencement (10) selon l'une quelconque des revendications précédentes, dans lequel le circuit de secours (LH) comprend une résistance d'entrée qui est connectée à l'entrée de non-inversion du moyen de comparaison (COMP) et qui a une valeur de résistance électrique de manière à rendre une configuration désactivée d'une commande distinguable d'une configuration activée générale de la commande, indépendamment de la pluralité de configurations activées qui sont possibles dans le cas d'entrées de commande (INL, INW) ayant de multiples sélections avec un codage résistif.

16. Agencement (10) selon la revendication 6, dans lequel l'agencement de commutation (35) a un premier transistor bipolaire (T1) ayant sa borne collectrice apte à être connectée d'une manière contrôlée aux entrées de commande (INL, INW, INB), sa borne émettrice connectée au moyen de régulation de tension (30), et sa borne de base connectée à la borne collectrice d'un second transistor bipolaire (T2) dont la borne émettrice est connectée à un potentiel de référence et dont la borne de base est connectée au moyen de temporisation (40).
